# EUROPÄISCHE PATENTSCHRIFT

(11) **EP 2 388 633 B1**
(45) Veröffentlichungstag und Bekanntmachung des Hinweises auf die Patenterteilung: **16.01.2013**
(21) Anmeldenummer: 11166967.7
(22) Anmeldetag: 20.05.2011
(51) Int. Cl.: G02B 15/06, G03B 35/08, G03B 17/14

(54) **Kamera mit mehreren Festbrennweiten**
Camera with multiple fixed focal lengths
Caméra dotée de plusieurs étendues de combustion solide

(30) Priorität: 21.05.2010 DE 102010017057
(43) Veröffentlichungstag der Anmeldung: 23.11.2011
(73) Patentinhaber: Jena-Optronik GmbH, 07745 Jena (DE)
(72) Erfinder: Kirschstein, Steffen, 07751 Zöllnitz (DE); Kolb, Florian, 07747 Jena (DE); Krämer, Dirk, 07747 Jena (DE); Würl, Richard, 07747 Jena (DE)
(74) Vertreter: Ege, Guido

(56) Entgegenhaltungen:
- EP-A1- 1 335 176
- EP-A1- 1 679 538
- EP-A2- 1 383 342
- DE-U1-202009 002 387
- US-A1- 2010 066 894

## Beschreibung

Die Erfindung betrifft eine Kamera insbesondere in einem Raumfahrzeug mit einem zumindest eine optisch sensitive Aufnahmefläche enthaltenden Gehäuse und jeweils einem mit diesem verbundenen, auf die zumindest eine Aufnahmefläche projizierenden und auf einer ersten optischen Achse zur Aufnahmefläche angeordneten Grundobjektiv mit einer ersten Festbrennweite.

Kameras mit Wechselobjektiven unterschiedlicher Festbrennweite und Zoomobjektiven mit variabler Brennweite sind hinreichend bekannt. Insbesondere für Weltraumeinsätze werden an derartige Kameras nicht nur hinsichtlich der kritischen Einsatzbedingungen besonders hohe Anforderungen gestellt, vielmehr müssen derartige Kameras bei einem geringen spezifischen Gewicht automatisiert zu bedienen und wartungsarm sein. Weiterhin sollen derartige Kameras ein weites Sehfeld mit einer entsprechend hohen Brennweitenspanne der verwendeten Optik abdecken können.

Eine Möglichkeit zur Einstellung variabler Brennweiten sind Zoom-Objektive, die durch die Verschiebung einzelner optischer Linsen und/oder Linsengruppen unterschiedliche Brennweiten ermöglichen. Eine entsprechende Bereitstellung von Verstellmechanismen ist dabei insbesondere unter den im Weltraum herrschenden Bedingungen aufwendig und störungsanfällig. Die mit vertretbarem Aufwand verbleibenden Aberrationen derartiger Zoom-Objektive wiegen einen quasi kontinuierlich durchstimmbaren Brennweitenbereich nicht auf.

Mehrere Kameras mit einzelnen Festbrennweiten liefern zwar für die einzelnen Brennweiten kalibrierte Bedingungen mit hoher Messgenauigkeit und hoher Zuverlässigkeit, sind aber infolge der für jede Kamera getrennt auszuführenden Bilderfassungs- und Bildverarbeitungselektronik mit entsprechenden optischen Sensoren kosten- und bauraumaufwendig.
Die EP 1 335 176 A1 offenbart eine optische Anordnung in einem Vorfeld-Infrarotsystem mit mehreren bezüglich ihrer optischen Achsen zueinander parallel angeordneten Objektiven mit unterschiedlichen Brennweiten, deren Strahlengänge mittels Umlenkspiegeln in einen Strahlengang eingekoppelt werden, der mittels eines weiteren Umlenkspiegels auf einen bezüglich seiner optischen Achse senkrecht zum Sichtfeld angeordneten Detektor umgelenkt wird.
Die EP 1 679 538 A1 offenbart ein reflektives optisches System mit mehreren Spiegelobjektiven, die mittels mehrerer Umlenkspiegel hintereinander in einen mit einem Detektor versehenen Strahlengang schaltbar sind.
Die DE 20 2009 002 387 U1 offenbart eine optische Anordnung mit variablem Abbildungsverhältnis und/oder Brechkraft, indem in einen optischen Strahlengang dieser verschiedene opische Elemente eingeschwenkt werden.

Aufgabe der Erfindung ist daher, eine Kamera insbesondere für den Einsatz im Weltraum so weiterzubilden, dass unter Einsatz mehrerer Festbrennweiten ein automatisierter Wechsel der Brennweiten ermöglicht wird.

Die Aufgabe wird durch eine Kmera nach Anspruch 1 gelöst. Die Ansprüche 2 bis 7 gaben vorteilhafte Ausführungbeipiele wieder.

Unter Kamera ist dabei eine Festbildkamera oder Bildfolgen vorzugsweise in Echtzeit darstellende Kamera zu verstehen, die als zumindest eine Aufnahmefläche einen lichtempfindlichen Chip, beispielsweise einen CCD-Sensor, CMOS-Detektor oder abhängig von der zu erfassenden optischen Strahlung einen anderen hierfür geeigneten Sensor aufweist. Dabei kann eine Aufnahmefläche einem beispielsweise mittels des Gehäuses kalibriert zugeordneten Grundobjektiv fest zugeordnet sein. Alternativ können mehrere, bevorzugt zwei zueinander in gegebenem Abstand angeordnete Aufnahmeflächen vorgesehen sein, denen jeweils ein Grundobjektiv zugeordnet ist, so dass bei synchronischer Bedienung der Kamera eine Stereoabbildung der optischen Ziele auf den Aufnahmeflächen möglich ist.

Der Einsatz der Kamera erfolgt bevorzugterweise im Weltraum, beispielsweise in Raumfahrzeugen wie Satelliten und dergleichen. Mittels der vorgeschlagenen Kamera als sogenannte einäugige Kamera mit lediglich einer Aufnahmefläche und einer zugehörigen Optik lassen sich Abstände über einen weiten Entfernungsbereich von beispielsweise 2 km bis in einen Nahbereich von beispielsweise bis zu 60 cm bei entsprechender Entfernungsermittlung beobachten und vorausberechnen. Wird eine zweiäugige Kamera mit zwei beabstandeten Aufnahmeflächen mit jeweils einer Optik verwendet, kann zusätzlich neben einer Beobachtung auch eine schnelle Rotation von Objekten und die Entfernung anderer Raumfahrzeuge wie nicht-kooperativen Satelliten, Ladeflächen, Weltraummüll und dergleichen ausreichend genau ermittelt werden.

Das Grundobjektiv ist dabei bevorzugt auf unendliche Entfernung eingestellt und weist damit einen Tiefenschärfebereich in einem für die Festbrennweite von beispielsweise 50 mm bis 70 mm interessanten Entfernungsbereich wie Beobachtungsbereich auf. Das Grundobjektiv bildet dabei eine erste Festbrennweite, wobei dem Grundobjektiv eine erste Prismenfläche des verschwenkbaren Prismas fest zugeordnet ist und eine zu dieser parallel angeordnete, bezüglich der optischen Achse des Grundobjektivs mit einer parallel verschobenen optischen Achse ausgebildete zweite Prismenfläche auf das Sehfeld gerichtet ist.

Zur Änderung der Festbrennweite wird an diese zweite Prismenfläche die Ausgangspupille eines der afokalen Vorsatzobjektive durch entsprechende Verschwenkung des Prismas vorgeschaltet. Dabei erzeugt eines der afokalen Vorsatzobjektive bei optischer Koppelung mit dem Grundobjektiv eine größere und ein weiteres afokales Vorsatzobjektiv bei Koppelung mit dem Grundobjektiv eine kleinere Festbrennweite. Auf diese Weise wird die Festbrennweite des Grundobjektivs durch die sich mittels der anderen Vorsatzobjektive bildenden Festbrennweiten eingegabelt, so dass ein Wechsel der Festbrennweiten von einem Weitwinkelsehfeld zu einem Nahbereichssehfeld und umgekehrt mittels einer gleichsinnigen Drehung des Prismas und damit sehr schnell und auf kürzestem Wege erfolgen kann.

Der Aufbau der afokalen Vorsatzobjektive kann nach dem Prinzip eines Keplerschen Fernrohrs mit einer vorgegebenen Winkelvergrößerung erfolgen, wobei bei vorgegebener m-facher Winkelvergrößerung sich die Festbrennweite bei einem konventionell ausgelegten Vorsatzobjektiv zu x*m und bei einem invertierten Vorsatzobjektiv zu x/m ergibt Dabei entspricht x jeweils der Brennweite der Vorsatzobjektive.

Gemäß dem erfinderischen Gedanken sind die Austrittspupillen der Vorsatzobjektive beispielsweise mittels entsprechender Blenden oder einer Auslegung der Winkelvergrößerung durch die aktiven Linsen eines Vorsatzobjektivs so eingestellt, dass sie bei einem Einschwenken in die zweite Prismenfläche mit der Eintrittspupille des Grundobjektivs zusammenfallen. Auf diese Weise kann für alle drei Sehfelder dieselbe Pupille an dem Grundobjektiv eingestellt werden.

Das Prisma wird zur Ankoppelung der fest angeordneten Vorsatzobjektive oder der Ausrichtung des Strahlengangs des Grundobjektivs auf das gewünschte Sehfeld so verschwenkt, dass die zweite Prismenfläche gegenüber der ersten Prismenfläche um eine gemeinsame Achse verschwenkt wird. Hierdurch dreht die erste, der Eingangspupille des Grundobjektivs zugewandte Prismenfläche um die optische Achse des Grundobjektivs, während die zweite Prismenfläche mit ihrer optischen Achse jeweils koaxial zu der optischen Achse des durch das Prisma in den Strahlengang des Grundobjektivs eingeschwenkten Vorsatzobjektivs ausgerichtet wird. Zur Verschwenkung des Prismas kann dabei ein Schrittmotor vorgesehen werden, der das entsprechend gefasste Prisma auf einem Rotor aufnimmt, der koaxial zu der ersten optischen Achse, also der optischen Achse des Grundobjektivs angeordnet ist. Um den damit in der optischen Achse des Grundobjektivs liegenden Schrittmotor aus dem Strahlengang des Grundobjektivs bei einer Beobachtung des Sehfelds ausschließlich mit diesem ausblenden zu können, wird die zweite Prismenfläche des Prismas in eine Stellung zwischen den beiden Vorsatzobjektiven verdreht.

Die Erfindung wird anhand des in den Figuren 1 bis 4 dargestellten Ausführungsbeispiels näher erläutert. Dabei zeigen:
- Figur 1: eine Kamera mit einem Grundobjektiv und zwei einschwenkbaren Vorsatzobjektiven,
- Figur 2a-c: mögliche Einstellungen der Kamera der Figur 1,
- Figur 3 und: eine Seitenansicht des Grundobjektivs
- Figur 4: eine Seitenansicht des Grundobjektivs mit den angekoppelten Vorsatzobjektiven.

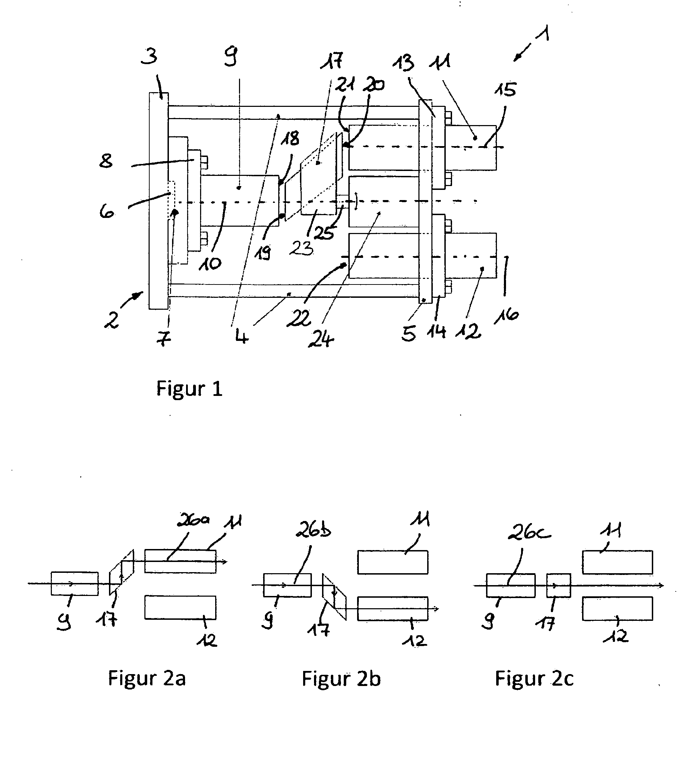

Figur 1 zeigt schematisch die hier einäugige Kamera 1 mit dem Gehäuse 2, das aus der Grundplatte 3, dem Rahmen 4 und der Objektivplatte 5 gebildet ist. An der Grundplatte 3 ist der CCD-Chip 6 mit der sensitiven Aufnahmefläche 7 befestigt, der die aus der Aufnahmefläche 7 auftreffenden optischen Signale und Informationen in elektrische Signale wandelt. Eine nachfolgende Signalverarbeitungseinheit mit einem Bildspeicher, Berechnungsprogrammen und dergleichen ist nicht dargestellt.

An der Grundplatte 3 über der sensitiven Aufnahmefläche 7 ist mittels des Objektivhalters 8 das Grundobjektiv 9 kalibriert montiert, dessen optische Achse 10 auf die Aufnahmefläche 7 lotrecht zentriert ist. In kalibriertem Abstand zu dem Grundobjektiv 9 sind zu der optischen Achse 10 mittels jeweils einer optischen Achse 15, 16 parallel und um die optische Achse 10 in gleichem Abstand verteilt die Vorsatzobjektive 11, 12 mittels der Objektivhalter 13, 14 in festem Abstand zu dem Grundobjektiv 9 in der Objektivplatte 5 untergebracht.

Bezogen auf die optischen Achsen 10, 15, 16 ist axial zwischen dem Grundobjektiv einerseits und den Vorsatzobjektiven 11, 12 andererseits das um die optische Achse 10 verdrehbare Prisma 17 mit einer zu der Eintrittspupille 18 des Grundobjektives 9 parallel ausgerichteten, optisch durchlässigen Prismenfläche 19 und einer zu den Austrittspupillen 21, 22 der Vorsatzobjektive 11, 12 parallel angeordneten, optisch durchlässigen Prismenfläche 20 vorgesehen. Die übrigen Prismenflächen des Prismas 17 sind verspiegelt, so dass das Prisma 17 als Lichtverteiler wirksam ist, der je nach Verdrehung des Prismas 17 eines der Vorsatzobjektive 11, 12 in den Strahlengang des Grundobjektivs 9 einschwenkt oder mit der Prismenfläche 20 auf den freien Raum - hier beispielsweise außerhalb der Papierebene gerichtet ist. Hierzu wird das Prisma 17 mittels der Fassung 23 auf dem um die optische Achse 10 drehenden Rotor 25 des Schrittmotors 24 aufgenommen.

Das Grundobjektiv 9 ist auf eine erste Festbrennweite von beispielsweise 63 mm ausgelegt und auf unendlich fokussiert. Die Vorsatzobjektive 11, 12 sind afokal als Keplersche Fernrohre mit einer vorgegebenen Winkelvergrößerung ausgelegt, wobei das Vorsatzobjektiv 11 im eingeschwenkten Zustand mit dem Grundobjektiv 9 eine Nahfeldoptik beispielsweise mit einer Festbrennweite von 200 mm ausbildet, während das invers ausgelegte Vorsatzobjektiv 12 im eingeschwenkten Zustand mit dem Grundobjektiv 9 eine Fernfeldoptik mit einer Festbrennweite von beispielsweise 20 mm aufweist, so dass insgesamt beispielsweise eine 10-fache Brennweitenvergrößerung verwirklicht ist. Die Austrittspupillen 21, 22 der Vorsatzobjektive 11, 12 sind dabei der Eintrittspupille 18 angeglichen, so dass diese bei einem Einschwenken auf das Grundobjektiv 9 nach einer Strahlenführung durch die Prisma 17 zusammenfallen.

Die Figuren 2a bis 2c zeigen schematisch die drei Schaltmöglichkeiten der Kamera 1 der Figur 1 anhand des Mittelpunktstrahls 26a, 26b, 26c. Mithilfe des Prismas 17 werden dem Grundobjektiv 9 die Vorsatzobjektive 11, 12 zugeschaltet oder das Grundobjektiv 9 ohne Vorsatz betrieben. Hierbei zeigt Figur 2a die Schaltung der Nahfeldoptik mit vor das Grundobjektiv 9 geschaltetem Vorsatzobjektiv 11 zur Bildung der Festbrennweite von beispielsweise 200 mm, die Figur 2b die Schaltung der Fernfeldoptik mit vor das Grundobjektiv 9 geschaltetem Vorsatzobjektiv 12 zur Bildung der Festbrennweite von beispielsweise 20 mm und die Figur 2c den mittels des Prismas 17 um die Vorsatzobjektive 11, 12 gelenkten Strahlengang des Grundobjektivs 9 mit einer Festbrennweite von beispielsweise 63 mm.

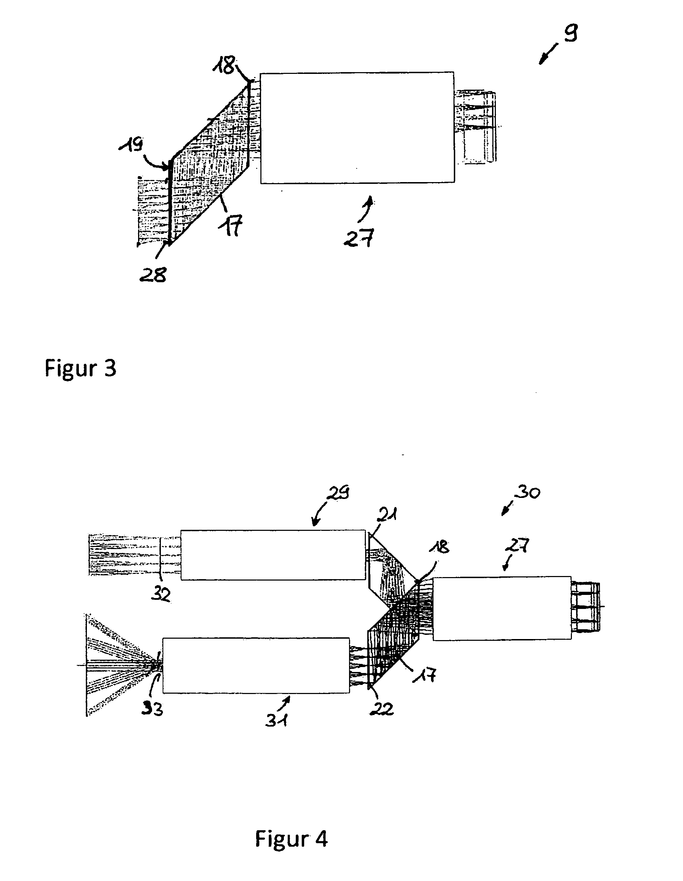

Figur 3 zeigt den Strahlengang des Grundobjektivs 9 durch den zugehörigen Linsensatz 27 und das nachgeschaltete Prisma 17. Zur Einstellung einer einheitlichen Eintrittspupille des Grundobjektivs 9 ist an der Prismenfläche 19 die Eingangsblende 28 angeordnet.

Figur 4 zeigt die vereinigt dargestellten Strahlengänge der gesamten Optik 30 der Kamera 1 der Figur 1, die durch die Linsensätze 27 des Grundobjektivs 9 (Figur 1), das Prisma 17 und die Linsensätze 29, 31 der Vorsatzobjektive 11, 12 (Figur 1) gebildet wird. Durch die Anordnung der aktiven Linsen der Linsensätze 29, 31 sowie des Durchmessers der Eintrittspupillen 32, 33 der Vorsatzobjektive 11, 12 werden die Austrittspupillen 21, 22 aufeinander und auf die Eintrittspupille 18 des Grundobjektivs abgeglichen.

### Bezugszeichenliste

- 1: Kamera
- 2: Gehäuse
- 3: Grundplatte
- 4: Rahmen
- 5: Objektivplatte
- 6: CCD-Chip
- 7: Aufnahmefläche
- 8: Objektivhalter
- 9: Grundobjektiv
- 10: optische Achse
- 11: Vorsatzobjektiv
- 12: Vorsatzobjektiv
- 13: Objektivhalter
- 14: Objektivhalter
- 15: optische Achse
- 16: optische Achse
- 17: Prisma
- 18: Eintrittspupille
- 19: Prismenfläche
- 20: Prismenfläche
- 21: Austrittspupille
- 22: Austrittspupille
- 23: Fassung
- 24: Schrittmotor
- 25: Rotor
- 26a: Mittelpunktstrahl
- 26b: Mittelpunktstrahl
- 26c: Mittelpunktstrahl
- 27: Linsensatz
- 28: Eingangsblende
- 29: Linsensatz
- 30: Optik
- 31: Linsensatz
- 32: Eintrittspupille
- 33: Eintrittspupille

## Patentansprüche

1. Kamera (1) mit einem zumindest eine optisch sensitive Aufnahmefläche (7) enthaltenden Gehäuse (2) und jeweils einem mit diesem verbundenen, auf die zumindest eine Aufnahmefläche (7) projizierenden und auf einer ersten optischen Achse (10) zur Aufnahmefläche (7) angeordneten Grundobjektiv (9) mit einer ersten Festbrennweite und einer Eintrittspupille, **dadurch gekennzeichnet, dass** in dem Gehäuse (2) zumindest zwei afokale Vorsatzobjektive (11, 12) bezüglich ihrer optischen Achsen (15, 16) jeweils parallel und zu der ersten optischen Achse (10) in gleichem Abstand angeordnet sind, deren Austrittspupillen (21, 22) mittels eines um die erste optische Achse (10) verschwenkbaren Prismas (17) wechselweise unter Bildung weiterer Festbrennweiten mit der Eintrittspupille (18) des Grundobjektivs (9), so dass jeweils eine Austrittpupille mit der Eintrittspupille zusammenfüllt, koppelbar sind,

2. Kamera (1) nach Anspruch 1, **dadurch gekennzeichnet, dass** das Grundobjektiv auf unendliche Entfernung fokussiert ist.

3. Kamera (1) nach Anspruch 1 oder 2, **dadurch gekennzeichnet, dass** eines der afokalen Vorsatzobjektive (11) bei optischer Koppelung mit dem Grundobjektiv (9) eine größere und ein weiteres afokales Vorsatzobjektiv (12) bei Koppelung mit dem Grundobjektiv (9) eine kleinere Festbrennweite erzeugt.

4. Kamera (1) nach einem der Ansprüche 1 bis 3, **dadurch gekennzeichnet, dass** die Vorsatzobjektive (11, 12) als Keplersche Fernrohre mit einer vorgegebenen Winkelvergrößerung ausgebildet sind.

5. Kamera (1) nach einem der Ansprüche 1 bis 4, **dadurch gekennzeichnet, dass** das Prisma (17) mittels eines Schrittmotors (24) mit einem zu der ersten optischen Achse (10) koaxial angeordneten Rotor (25) angetrieben wird.

6. Kamera nach einem der Ansprüche 1 bis 5, **dadurch gekennzeichnet, dass** zwei optisch sensitive Aufnahmeflächen beabstandet zueinander mit jeweils einem Grundobjektiv und einkoppelbaren Vorsatzobjektiven vorgesehen sind und aus den Aufnahmeflächen ermittelte Daten zu einem räumlichen Bild verarbeitet werden.

7. Kamera nach Anspruch 6, **dadurch gekennzeichnet, dass** mittels der Daten der Aufnahmeflächen eine Entfernung eines Objekts von der Kamera ermittelt wird.

## Claims

1. Camera (1) having a housing (2) including at least one optically sensitive recording surface (7), and in each case a basic lens (9), which is connected to said housing, projects onto the at least one recording surface (7) and is arranged on a first optical axis (10) relating to the recording surface (7) and which has a first fixed focal length and an entrance pupil, **characterized in that** at least two afocal front lenses (11, 12) are respectively arranged in the housing (2) parallel with reference to their optical axes (15, 16) and at an equal spacing from the first optical axis (10), it being possible to couple their exit pupils (21, 22) to the entrance pupil (18) of the basic lens (9) by means of a prism (17) pivotable about the first optical axis (10), alternately with the formation of further fixed focal lengths, such that an exit pupil respectively coincides with the entrance pupil.

2. Camera (1) according to Claim 1, **characterized in that** the basic lens is focused to infinity.

3. Camera (1) according to Claim 1 or 2, **characterized in that** one of the afocal front lenses (11) has a relatively large fixed focal length when optically coupled to the basic lens (9), and a further afocal front lens (12) has a relatively small fixed focal length when coupled to the basic lens (9).

4. Camera (1) according to one of Claims 1 to 3, **characterized in that** the front lenses (11, 12) are designed as Kepler telescopes with a prescribed angular magnification.

5. Camera (1) according to one of Claims 1 to 4, **characterized in that** the prism (17) is driven by means of a stepping motor (24) with a rotor (25) arranged coaxially with the first optical axis (10).

6. Camera according to one of Claims 1 to 5, **characterized in that** two optically sensitive recording surfaces are provided spaced apart from one another and respectively having a basic lens and front lenses which can be coupled in, and data determined from the recording surfaces are processed to form a spatial image.

7. Camera according to Claim 6, **characterized in that** a distance of an object from the camera is determined with the aid of the data of the recording surfaces.

## Revendications

1. Caméra (1) comportant un boîtier (2) contenant au moins une surface de réception optiquement sensible (7) et un objectif de base (9) respectif relié à celle-ci, projetant vers l'au moins une surface de réception (7) et disposé sur un premier axe optique (10) de la surface de réception (7), ayant une première longueur focale fixe et une pupille d'entrée, **caractérisée en ce qu'**au moins deux objectifs auxiliaires afocaux (11, 12) sont disposés dans le boîtier (2) à chaque fois parallèlement l'un à l'autre par rapport à leurs axes optiques (15, 16) et à équidistance par rapport au premier axe optique (10), leurs pupilles de sortie (21, 22) pouvant être couplées par l'intermédiaire d'un prisme (17) pivotant autour du premier axe optique (10) de manière alternée en créant une longueur focale fixe supplémentaire avec la pupille d'entrée (18) de l'objectif de base (9) de manière à ce qu'une pupille de sortie respective coïncide avec la pupille d'entrée.

2. Caméra (1) selon la revendication 1, **caractérisée en ce que** l'objectif de base est focalisé à l'infini.

3. Caméra (1) selon la revendication 1 ou 2, **caractérisée en ce que** l'un des objectifs auxiliaires afocaux (11) crée une longueur focale fixe plus importante lors du couplage optique avec l'objectif de base (9) et **en ce qu'**un objectif auxiliaire afocal supplémentaire (12) crée une longueur focale fixe plus faible lors du couplage avec l'objectif de base (9).

4. Caméra (1) selon l'une quelconque des revendications 1 à 3, **caractérisée en ce que** les objectifs auxiliaires (11, 12) sont réalisés sous la forme de télescopes de Kepler de grossissement angulaire prédéterminé.

5. Caméra (1) selon l'une quelconque des revendications 1 à 4, **caractérisée en ce que** le prisme (17) est entraîné au moyen d'un moteur pas à pas (24) à l'aide d'un rotor (25) disposé coaxialement par rapport au premier axe optique (10).

6. Caméra selon l'une quelconque des revendications 1 à 5, **caractérisée en ce que** deux surfaces de réception optiquement sensibles sont disposées de manière mutuellement espacée et comprennent chacune un objectif de base et un objectif auxiliaire pouvant être couplés et **en ce que** les données obtenues en provenance des surfaces de réception sont transformées en une image spatiale.

7. Caméra selon la revendication 6, **caractérisée en ce qu'**une distance d' un objet est déterminée par la caméra au moyen des données des surfaces de réception.
